# NEW EUROPEAN PATENT SPECIFICATION

(11) **EP 0 640 897 B2**
(45) Date of publication and mention of the opposition decision: **21.08.2002**
(45) Mention of the grant of the patent: 08.07.1998
(21) Application number: 94306167.1
(22) Date of filing: 22.08.1994
(51) Int. Cl.: G04G 5/00

(54) **Broadcast signal receivers**
Rundfunksignalempfänger
Récepteur de signaux de radiodiffusion

(30) Priority: 25.08.1993 JP 21060593; 07.09.1993 JP 22235293
(43) Date of publication of application: 01.03.1995
(73) Proprietor: SONY CORPORATION, Tokyo (JP)
(72) Inventor: Hanai, Tomoyuki, c/o Intellectual Property Div., Shinagawa-ku, Tokyo 141 (JP); Kakurai, Kimio, c/o Intellectual Property Div., Shinagawa-ku, Tokyo 141 (JP); Hamamoto, Kenji, c/o Intellectual Property Div., Shinagawa-ku, Tokyo 141 (JP)
(74) Representative: Turner, James Arthur

(56) References cited:
- EP-A- 0 355 567
- EP-A- 0 498 199
- EP-A- 0 562 410
- EP-A- 0 607 814
- DE-A- 3 877 837
- US-A- 3 811 265
- US-A- 4 635 121
- US-A- 4 993 003
- ELW Journal, Nr. 41, 1985, "ELV-Serie micro-line Funkuhrensystem doc 85", Seiten 41-47
- Der Rutroniker, Ausgabe 17/93, Funk-Uhr IC/Modul, S. 5

## Description

This invention relates to broadcast signal receivers.

As is known, current video tape recorders include an internal clock which identifies the current date and time, and which is operable to be used in conjunction with a programmed record setting which provides the function of allowing a user to set the video tape recorder to record a video signal transmitted over a designated channel at a specific future date or time. Currently, the internal clock of a video tape recorder is manually set by users who perform various steps specific to this time setting operation. Since timer recording of a video tape recorder operates as a function of the time indicated by its internal clock, the internal clock must be both manually and correctly set by the user in order for the proper "time" recording of "programmed" broadcast signals.

One problem encountered in a typical video tape recorder is the general difficulty in setting its internal clock. Because of such difficulty, many users elect not to set the internal-clock, which results in a constant display of 12:00 PM on the video tape recorder's display. Besides providing an undesirable display, an internal clock which has not been properly set obviates the effective use of the video tape recorders program recording functions. Another difficulty with current video tape recorders is the necessity of adjusting (i.e., resetting) the internal clock when it stores an incorrect time. Such an incorrect stored internal time may be caused by the removal of power to the videotape recorder (and without a proper back up power supply), incorrect time keeping by the internal clock, or a change between daylight saving time and standard time. In such cases, the video tape recorder user must again set the internal clock to the correct time. In addition, an incorrect clock results in an incorrect recording time when recording is initiated via a timer record function.

Documents which relate to the technological background of the present invention include US Patents Nos. US-A-4 329 684, US-A-4 390 901, US-A-4 499179, and US-A-4 635 121.

US Patent No. US-A-4 993 003 (which corresponds to European Patent Application Publication No. EP-A-0 355 567) includes a broadcast signal receiver having an internal clock indicating an internal clock time, the receiver comprising means for comparing the internal clock time with time data in a received videotext/teletext signal and automatically setting the internal clock to the time indicated by said time data in the event of divergence between the internal clock time and the time indicated by said time data.

US Patent No. US-A-4 635 121 (cited above) includes a radio and/or television receiver in which the user can program dates, times and transmitters of future transmissions. The receiver includes an internal clock for generating the current date and time, and means responsive thereto to tune the receiver to a programmed future transmission at the appropriate date and time.

According to a first aspect of the invention there is provided a broadcast signal receiver having an internal clock indicating an internal clock time, the receiver comprising:
means for receiving a plurality of broadcast signals;
tuning means tunable to a predetermined one of said broadcast signals having time data and supplying said predetermined one of said broadcast signals as a tuned output signal, said time data indicating (i) a local time and (ii) whether the local time is standard time or daylight saving time;
means for extracting said time data from said tuned output signal;
clock setting means responsive to said extracted local time data for automatically setting said internal clock to said local time; and
detecting means for detecting from said time data indicating whether the local time is standard time or daylight saving time when said local time indicated by said time data changes from daylight saving time to standard time or from standard time to daylight savhgtime, said clocksetting means being operative to set said internal clock to said local time when a said change from daylight saving time to standard time or from standard time to daylight saving time in said local time is detected by said detecting means.

According to a second aspect of the invention there is provided a method of setting an internal clock indicating an internal clock time in a broadcast signal receiver, the method comprising the steps of:
tuning to a predetermined one of a plurality of broadcast signals which has time data indicating (i) a local time and (ii) whether the local time is standard time or daylight saving time;
extracting said time data from said tuned broadcast signal;
setting said internal clock to said local time indicated by said extracted local time data; and
detecting, from said time data indicating whether the local time is standard time or daylight saving time, when said local time indicated by said time data changes from daylight saving time to standard time or from standard time to daylight saving time, said internal clock being set to said local time when a said change from daylight saving time to standard time or from standard time to daylight saving time in said local time is detected.

In accordance with a preferred embodiment of the invention, a broadcast signal receiver (e.g. a video tape recorder) which has an internal clock is tuned to a broadcast signal having time data which indicates the local time. The tuned broadcast signal is supplied as a tuned output signal from which the time data is extracted and used to automatically set the internal clock of the broadcast signal receiver to the local time indicated by the time data.

According to various preferred features of the embodiment, the internal clock is set to the local time after the broadcast signal receiver is turned off, when the internal clock is set to the local time at some predetermined time, when the difference between the internal clock time and the local time is below a predetermined threshold amount, when the difference between a programmed time for recording and the internal clock time is greater than another predetermined threshold amount, or when the internal clock was not previously set.

The preferred embodiment provides:
a broadcast signal receiver in which an internal clock is set automatically;
an apparatus and corresponding method wherein an internal clock is automatically set, thereby eliminating the need manually to set that clock;
automatic setting of an internal clock of a broadcast signal receiver in the event that the internal clock displays an incorrect time; and
an apparatus and method for automatically setting an internal clock in a broadcast signal receiver.

The invention will now be further described, by way of illustrative and non-limiting example, with reference to the accompanying drawings, in which like reference numerals denote like elements and parts throughout, and in which:
Fig. 1 is a block diagram of a cable box and a video tape recorder;
Fig. 2A is a timing diagram of a broadcast video signal and Fig. 2B is a schematic diagram illustrating types of data supplied in the broadcast signal;
Fig. 3 is a flow chart of the operation of a broadcast signal receiver;
Fig. 4 is a flow chart illustrating the operation of another broadcast signal receiver;
Fig. 5 is a flow chart illustrating the operation of a further broadcast signal receiver;
Fig. 6 is a block diagram of a cable box and a video tape recorder in accordance with an embodiment of the invention; and
Figs. 7A to 7D are time charts used to explain the operation of an embodiment of the invention.

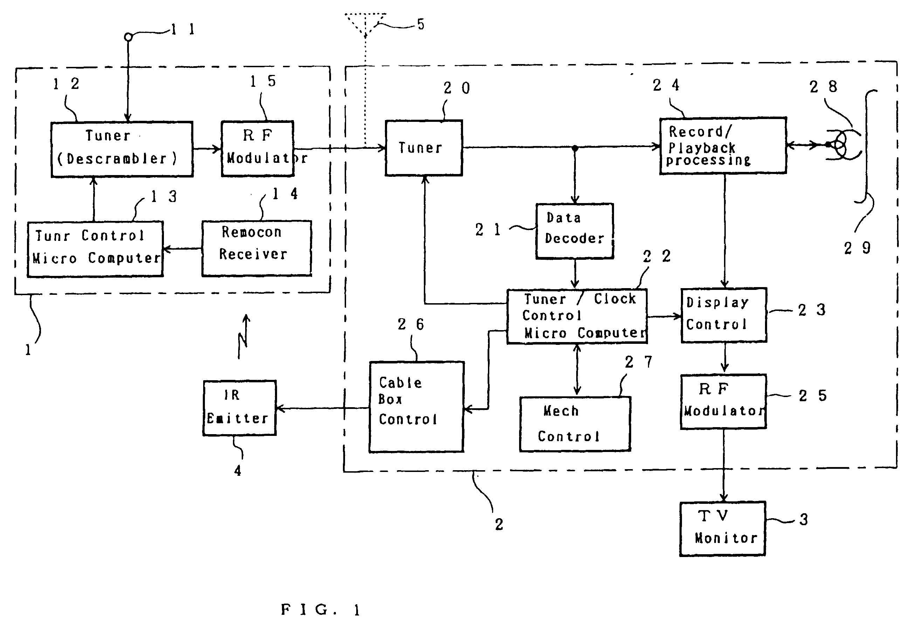

Fig. 1 shows a broadcast signal receiver apparatus including a cable box 1 and a video tape recorder 2. Cable box 1 provides external broadcast signal receiving and tuning means and includes a tuner 12, a tuner control microcomputer 13, a remote control receiver 14, and an RF modulator 15. Tuner 12 receives a cable television (CATV) signal which is supplied to input terminal 11, as from a cable broadcasting company. In addition to tuning to a selected channel, tuner 12 generally is further operable to descramble selected scrambled channels. Tuner 12 tunes to a selected channel of the CATV signal in accordance with a control signal supplied by tuner control microcomputer 13, the channel being selected by a user and represented by a control signal supplied by remote control receiver 14. Remote control receiver 14 receives a remote control signal (e.g., an infrared signal) from a remote control unit 4 (to be described) operated by the user. Tuner 12 tunes to the selected channel and supplies the corresponding video signal to RF modulator 15 which converts the video signal into a broadcast signal. The broadcast signal is supplied to video tape recorder 2. The operation of cable box 1 is well known in the art, and therefore, further description of such operation is omitted, except where necessary for an understanding the present description.

Video tape recorder 2 is comprised of a tuner 20, a data decoder 21, a tuner/clock control microcomputer 22, a display control 23, a record/playback processing circuit 24, an RF modulator 25, a cable box controller 26, a mechanical controller 27, and magnetic heads 28. Tuner 20 is operable to receive the broadcast signal supplied by cable box 1, and is also operable to receive broadcast signals supplied by an external antenna 5. Tuner 20 tunes to a selected channel in accordance with a control signal supplied thereto by microcomputer 22, and supplies the signals on the selected channel to data decoder 21 and record/playback processing circuit 24. It is appreciated that tuner 20 performs a tuning function similar to that performed by tuner 12 in cable box 1.

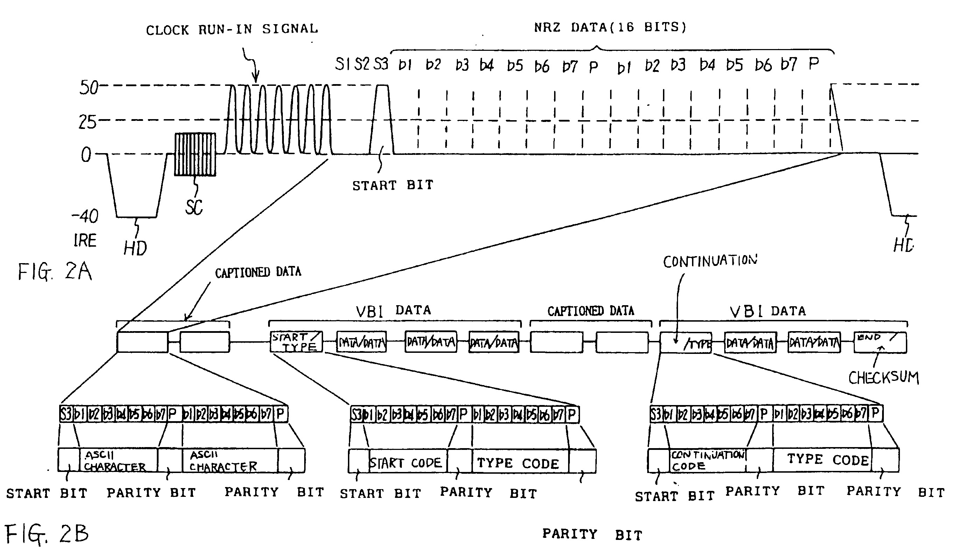

The broadcast signal, which is an NTSC video signal, supplied to data decoder 21 may contain "captioned" data inserted into predetermined horizontal lines of each vertical line interval of the NTSC video signal. Fig. 2A illustrates an NTSC video signal having captioned data. As shown, a predetermined line interval in the vertical blanking interval is comprised of a horizontal synchronizing signal HD followed by a color burst signal SC, seven cycles of a clock run-in signal (503 KHz), three bits S1, S2 and S3, and 16 bits of data known as "NRZ" data. The clock run-in signal provides synchronization for the reading of the NRZ data which follows bits S1-S3 formed of two low bits S1 and S2 and high bit S3 (i.e., the start bit). The NRZ data is composed of two 8 bit groups wherein each group includes a seven bit AS-CII character b1-b7 and a parity bit p.

Returning to Fig. 1, data decoder 21 extracts the NRZ data from the video signal and decodes the NRZ data (which may be represented as a hexadecimal code) into a binary coded decimal (BCD) code. The decoded captioned data is supplied to microcomputer 22 which stores the decoded captioned data in a random access memory (RAM) (not shown). Microcomputer 22 supplies the captioned data to display control circuit 23 which converts the decoded captioned data into character data (e.g., dot data), and microcomputer 22 also supplies to display control circuit 23 a position control signal which indicates the location at which the character data is to be superimposed on the video image. The position control signal represents a desired position of the video picture, e.g. left top corner, right top corner, left bottom corner, right bottom corner, center, etc. Display control circuit 23 receives from record/playback processing circuit 24 the broadcast video signal and superimposes the character data (i.e., captioned data) on the video signal at the position indicated by the position control signal. The resulting video signal is supplied to RF modulator 25 which converts the video signal and superimposed character data into a signal displayable on television monitor 3. Accordingly, character data or "captions" are superimposed on broadcast video signals displayed on television monitor 3.

Microcomputer 22 further operates as a channel selection controller which supplies a selected channel control signal to cable box controller 26, the selected channel being either a manually selected channel (e.g., a user manually selects the channel via a remote control device) or a preprogrammed channel. In response to the control signal from microcomputer 22, cable box controller 26 supplies a control drive signal to remote control unit 4, which supplies a remote control signal to cable box 1, and this, in turn, operates to tune the cable box to the selected channel as previously described. In addition to controlling the channel selection (i.e. tuning) by tuner 12 in cable box 1 and tuner 20 of video tape recorder 2, microcomputer 22 further is operable to provide power on and off control of cable box 1 via cable box controller 26 and remote control unit 4. In addition, microcomputer 22 is operable to set an internal clock included in the tuner/clock control of microcomputer 22.

Mechanical controller 27 provides the drive control of the recording/reproducing heads, and video and tape feeder portions of video tape recorder 2, the operation of which being well known in the art. For example, the mechanical controller controls play, fast forward, rewind, slow motion, record and similar functions.

During a recording operation of video tape recorder 2, record/playback processing circuit 24 process the video signal supplied by tuner 20 to form a record signal. A magnetic head 28 of video tape recorder 2 records the record signal onto a magnetic tape 29 loaded into video tape recorder 2. Similarly, during a playback operation of video tape recorder 2, record/playback processing circuit 24 in conjunction with magnetic head 28 reproduces the video signal recorded on magnetic tape 29, and supplies the reproduced video signal to display control circuit 23. The video signal may then be displayed on television monitor 3 via RF modulator 25.

Referring back to Fig. 2A, captioned data is multiplexed on selected horizontal lines of each (or selected) vertical line interval of the broadcast video signal. Other "special" information, known as VBI data, may similarly be multiplexed onto the broadcast signal. VBI data may include, for example, time data indicating the current time of day and whether the current time is daylight saving time or standard time, as well as, current and future program information which may include a program's start time, its elapsed time, and its content. VBI data may further include information about the station broadcasting the broadcast signal, as well as weather and news information.

Fig. 2B illustrates the data structure of captioned data and VBI data included in a vertical line interval of the broadcast signal. As shown, VBI data multiplexed in a horizontal line interval of the vertical line interval is composed of 16 bits of NRZ data, which includes 7 bits of data b1 to b7, a parity bit p, followed by another 7 bits of data b1 to b7 and another parity bit p. These first 16 bits of VBI data, which represent a first "line", indicate a start code and the type of VBI data. In particular, the first 7 bits b1 to b7 indicate a "class" of the VBI data (to be described), and the latter 7 bits b1 to b7 identify the type of data within the indicated class. Successive VBI data in following lines of the vertical blanking interval (i.e., the successive lines) represent data pertaining to the class/type identified in the first line of the VBI data.

If the transmission of VBI data is interrupted by the transmission of captioned data, the transmission of the remaining VBI data will continue upon termination of the captioned data transmission. In this instance, the first 7 bits of VBI data which follows the captioned data represents a continuation code, and is followed by the seven bits b1 to b7 which repeat the type of the VBI data. Upon completion of the transmission of the VBI data, one final line of VBI data is transmitted which includes a 7 bit end code, a parity bit, a 7 bit checksum code and another parity bit.

Examples of VBI data classes include "current program information" and "future program information ", and the type of data that may be available in each class includes "program start time", "length/time elapsed", "program title", "program type", "program audience", etc. Another class is "channel information" which represents special information about the selected channel (other than the broadcast program) and the type of data that may be available in this class includes "network name", "station ID", "tape delay" (which represents the delay in hours and minutes of the network program delivered for broadcast by the local station), etc. The VBI data may also be identified by the class "miscellaneous information", and the type of data that may be available in this class includes "Greenwich time", "local time zone", "daylight saving time use", etc. Another possible class is "public service/weather service/message", and the type of data that may be available in this class includes "weather service". For present purposes the primary concern is with data included in the "miscellaneous information" class, and hereinafter this data is identified as "time data".

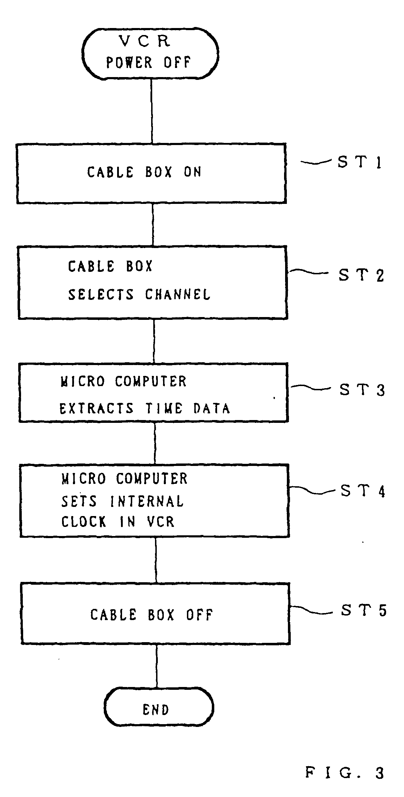

Fig. 3 is a flow chart illustrating the operation of the broadcast signal receiver and represents the instructions performed by microcomputer 22 of video tape recorder 2 for automatically setting the internal clock of video tape recorder 2. As shown, the operation of automatically setting the internal clock begins when video tape recorder 2 is manually turned off by a user, wherein cable box 1 is turned on in response to a control signal from remote control unit 4, as represented by instruction ST1. After cable box 1 is turned on, microcomputer 22 supplies a second control signal to cable box 1 via cable box controller 26 and remote control unit 4 instructing tuner 12 in cable box 1 to tune to a selected predetermined channel whose broadcast signal contains VBI data which includes time data, as shown by instruction ST2. As is appreciated, when cable box 1 is not present to receive broadcast signals, microcomputer 22 controls tuner 20 in video tape recorder 2 to tune to this predetermined channel. Then, as represented by instruction ST3, microcomputer 22 via data decoder 21 extracts the time data from the VBI data included in the received broadcast signal. In a preferred embodiment, the time data indicates Greenwich time or local time, and further indicates whether local time is daylight saving time or standard time. It is appreciated that the VBI data may contain both Greenwich time and local time, and may also contain the current calendar date (it is appreciated that a change from or to daylight saving time may be determined from the current calendar date and time). Microcomputer 22 sets the internal clock of video tape recorder 2 to the local time, as represented by instruction ST4, whereupon cable box 1 is turned off, as shown by instruction ST5.

It is appreciated that when a user turns off cable box 1 and video tape recorder 2, power nevertheless remains supplied to various components of video tape recorder 2 so that the internal clock may be automatically set, and upon completion of setting the internal clock, power may be removed. Since the operation of automatically setting the internal clock requires that time data be received and such time data is included only on selected broadcast signals, causing the tuner to tune to the selected broadcast signal while video tape recorder 2 is on (i.e., the user has not manually turned off video tape recorder 2) causes an undesirable change in the channel selection. Such a change in channel selection during the operation of video tape recorder 2 may cause either interrupted viewing of a selected channel or an interruption of the recording of a broadcast program. Accordingly, these undesirable interruptions are avoided by deferring the automatic setting of the internal clock control after the video tape recorder 2 is turned off.

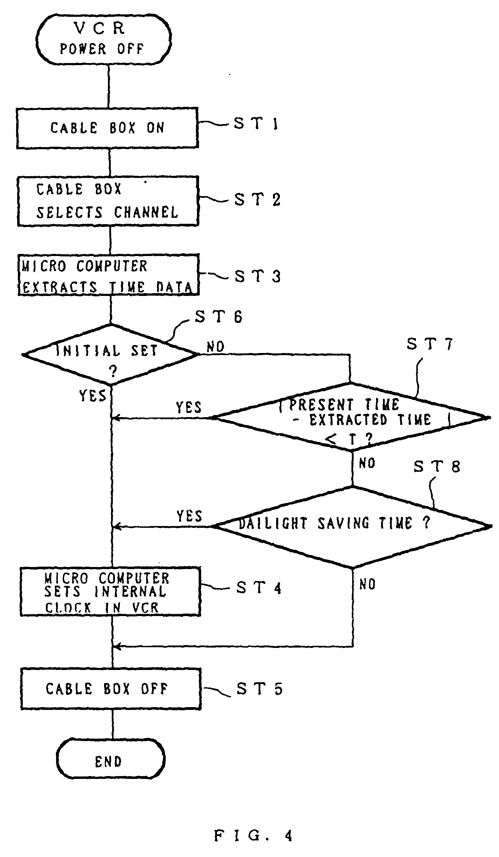

Fig. 4 is a flow chart illustrating another broadcast signal receiver, wherein those instructions shown in Fig. 4 which correspond to the same instructions shown in Fig. 3 are denoted by the same reference numerals. After video tape recorder 2 is turned off, cable box 1 is turned on and then controlled to tune to the predetermined channel whose broadcast signal contains the VBI (time) data. As before, the time data is extracted from the broadcast signal, as represented by instructions ST1, ST2, and ST3, respectively, in a manner similar to that described with reference to Fig. 3.

After the time data is extracted from the broadcast signal, microcomputer 22 determines whether the current operation of automatically setting the internal clock represents the initial setting of the internal clock, as represented by inquiry ST6. That is, microcomputer 22 determines if the internal clock was previously set. If it is determined that the current operation is the initial setting of the internal clock, then microcomputer 22 sets the internal clock to the local time, as represented by instruction ST4 and as has been described above. If not, microcomputer 22 determines whether the difference in time between the local time indicated in the extracted time data and the internal clock time is below a predetermined threshold level T (e.g., 10 minutes), as represented by inquiry ST7. If the determined difference is below the predetermined level T, microcomputer 22 sets the internal clock to the local time, as represented by instruction ST4. If the determined difference is not below the predetermined level T, for example, if the difference between the local time and the internal control time is greater than 10 minutes, microcomputer 22 then determines whether there was a change in the local time (as represented by the extracted time data) between daylight saving time and standard time, as represented by instruction ST8. If such a change is detected, microcomputer 22 sets the internal clock to the local time at instruction ST4. However, if there was no change from or to daylight savings time, cable box 1 is turned off, as represented by instruction ST5. Similarly, after completion of instruction ST4, cable box 1 is turned off.

In the arrangement illustrated in Fig. 4, the internal clock is set to the local time indicated in or derived from the extracted time data, except when the internal clock had been previously set, the difference between the internal clock time and the local time is greater than the predetermined level T, and there is no change from or to daylight saving time. These conditions, which result in not setting the internal clock to the local time, likely represent an incorrect local time due to "noise" or some other problem in the transmission of the VBI data. As previously discussed, the internal clock may indicate an incorrect time when there is a loss of power to the internal clock or there is incorrect time keeping by the internal clock, such situations resulting in the automatic setting of the internal clock to the local time after video tape recorder 2 is turned off. Further, an incorrect internal clock time due to a change in local time between daylight saving time and standard time also results in the automatic setting of the internal clock.

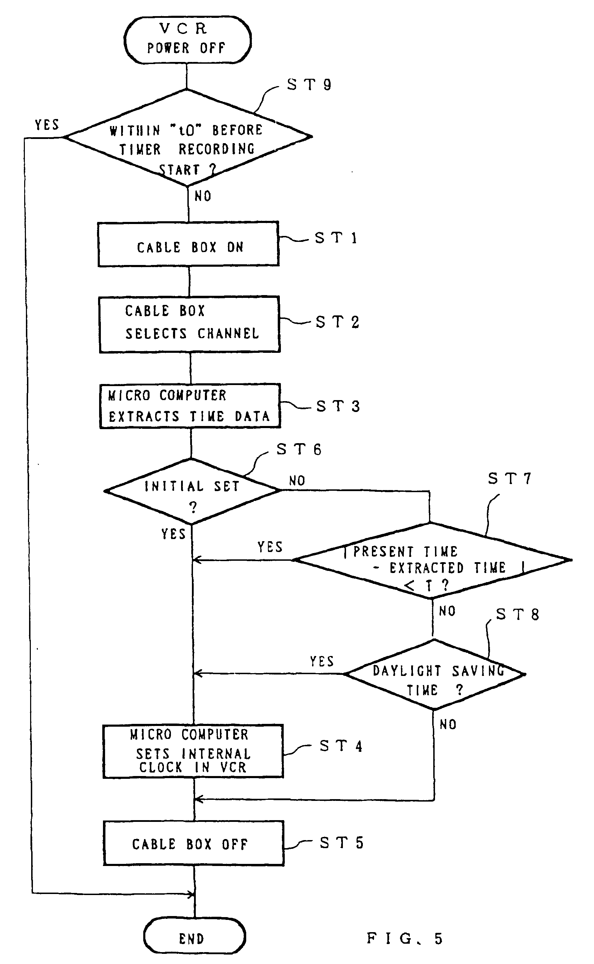

Fig. 5 is a flow chart of the operation of a further broadcast signal receiver. As shown, the operation of automatically setting the internal clock to the local time is initiated when video tape recorder 2 is turned off, at which time microcomputer 22 determines whether the existing amount of time before a "preprogrammed" record setting begins recording is less than a predetermined time amount "t0" (e.g., 5 minutes), as represented by inquiring ST9. That is, microcomputer 22 determines the difference between the internal clock time and the "programmed time", wherein the programmed time represents the time at which the recording of a broadcast program is to begin. If it is determined that this difference in time is less than the predetermined time amount t0, the operation for automatically setting the internal clock terminates. However, if the calculated difference in time is greater than the predetermined time amount t0, cable box 1 is turned on, as represented by instruction ST1, and the operation of automatically setting the internal clock proceeds in the same manner shown in Fig. 4, previously described.

In the embodiment shown in Fig. 5, microcomputer 22 does not set the internal clock when video tape recorder 2 is about to begin recording. This prevents the internal clock from being set when there is a possibility that setting the internal clock may cause a "skipping over" of the programmed record start time.

In the above described arrangements, the operation of automatically setting the internal clock to the local time is initiated when video tape recorder 2 is turned off. However, it is appreciated that such operations may be performed at a fixed time of each day or at a fixed time and day of each month (or year) when video tape recorder 2 is not on (i.e., not being used). Further, such operations may be performed at a fixed time regardless of whether video tape recorder 2 is on or off. In addition, the above described embodiments provide that cable box 1 is controlled to tune to a selected predetermined channel. Accordingly, upon extracting the time data from the broadcast signal (instruction ST3), it may be advantageous to control cable box 1 to tune to the channel to which it was originally tuned prior to the initiation of the automatic setting operation.

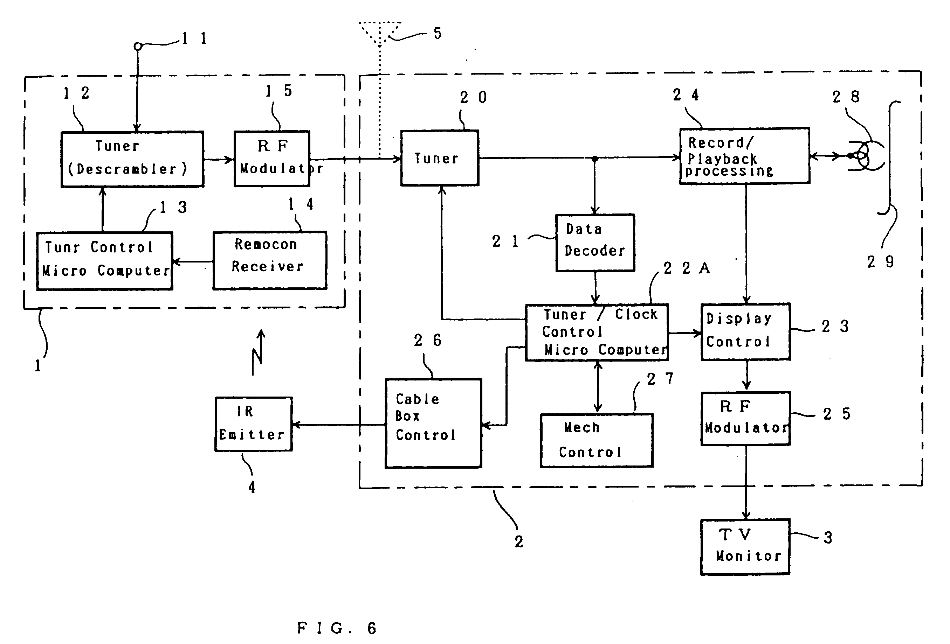

Fig. 6 is another block diagram of a video tape recorder used with a cable box in which the present invention finds ready application, wherein VBI data contained in the broadcast signal includes time data which indicates a change between daylight savings time and standard time. The embodiment shown in Fig. 6 is the same in all respects to the arrangement shown in Fig. 1, except a microcomputer 22A responsive to a change between daylight saving and standard time controls the operation of video tape recorder 2, and therefore, the description of those parts shown in Fig. 6 that are also shown in Fig. 1 are omitted.

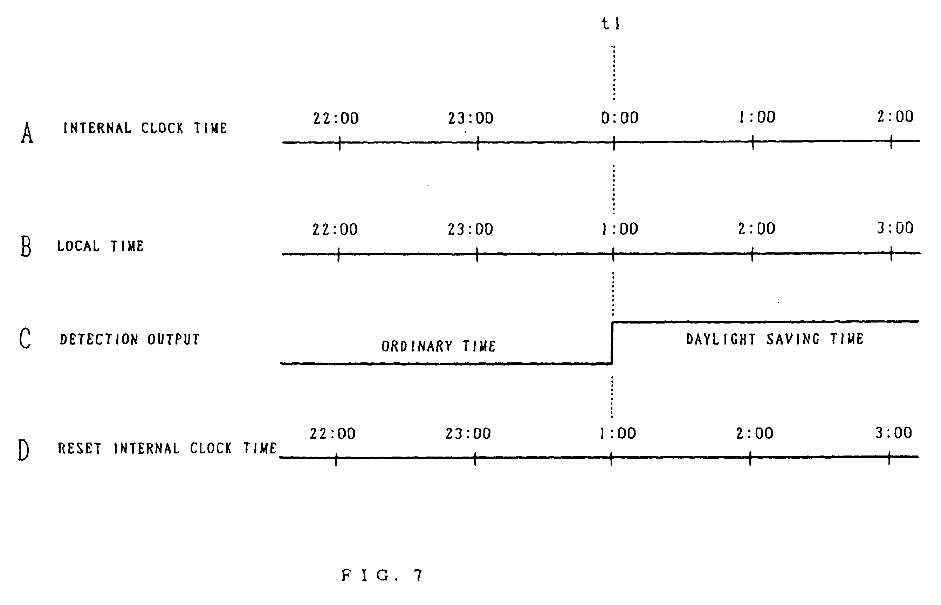

In the embodiment shown in Fig. 6, microcomputer 22A detects a change from or to daylight saving time based upon the time data in the VBI data. Figs. 7A to 7D illustrate an example of the internal clock time and the local time when the local time changes from standard time (also known as ordinary time) to daylight saving time. As shown in Figs. 7A and 7B, both the internal clock time and local time are the same at 22:00 (10:00 PM) and 23:00 (11:00 PM). However, at a time "t1", which indicates when there is a change from ordinary (standard) time to daylight saving time, as illustrated in Fig. 7C, the local time is 1:00 (AM) while the internal clock time is 0:00 (12:00 PM), thus resulting in an incorrect internal clock time of one hour. Microcomputer 22A detects this change from standard time to daylight saving time, and accordingly adjusts the internal clock to "gain" one hour at time tl. Fig. 7D illustrates the internal clock time after it is adjusted (i.e., reset). Microcomputer 22A similarly adjusts the internal clock when a change from daylight saving time to standard time is detected by setting the internal clock "back" one hour. It is appreciated that programmed recording operations are unaffected by a change of the internal clock time to either standard time or daylight savings time. However, it may be desirable to adjust a preprogrammed time of recording in a manner similar to the adjustment of the internal clock time when there is a change between standard time and daylight saving time. In this instance, the preprogrammed time is adjusted to "gain" one hour when the local time changes from standard time to daylight saving time, and is adjusted to "lose" one hour when the local time changes from daylight saving time to standard time. For example, the preprogrammed start time of recording is 2:30 PM and the preprogrammed stop time of recording is 3:30 PM, then the preprogrammed start time is changed to 1:30 PM and the preprogrammed stop time is changed to 2:30 PM when the local time changes from standard time to daylight saving time.

In another embodiment of the present invention, the operation of automatically setting the internal clock may be initiated after all of the programmed recording operations are complete.

In accordance with the above disclosure, automatically setting the internal clock ensures the proper timed operation of programmed record settings. In addition, good operation is provided in areas utilizing daylight saving time since the additional need of having to reset the internal clock at these time changes is obviated.

While the invention has been particularly shown and described in conjunction with preferred embodiments thereof, it will be readily appreciated by those of ordinary skill in the art that various changes may be made without departing from the scope of the claims. For example, while the operation of automatically setting the internal clock has been described in conjunction with a video tape recorder utilizing a cable box which receives broadcast signals, the present invention is not limited in use with a cable box and broadcast signals may be received directly via an antenna or other known broadcast signal receiving means, thereby obviating the cable box.

As another example, although the VBI data is described as being multiplexed on the video signal in a manner similar to the multiplexing of captioned data, the VBI data may be transmitted with the broadcast signal in other manners. Further, the present invention is not limited solely to VBI data with the disclosed format, but may utilize VBI data in other formats.

Still further, although the present invention is described in conjunction with a closed/captioned system, other systems, including a television receiver system, a radio receiver system and a satellite broadcast receiver system, may be utilized with the present invention.

Therefore, it is intended that the appended claims be interpreted as including the embodiments described herein, the alternatives mentioned above and all equivalents thereto.

## Claims

1. A broadcast signal receiver having an internal clock indicating an internal clock time, the receiver comprising:
means for receiving a plurality of broadcast signals;
tuning means (12/20) tuneable to a predetermined one of said broadcast signals having time data and supplying said predetermined one of said broadcast signals as a tuned output signal, said time data indicating (i) a local time and (ii) whether the local time is standard time or daylight saving time;
means (22A) for extracting said time data from said tuned output signal;
clock setting means (22A) responsive to said extracted local time data for automatically setting said internal clock to said local time; and
detecting means for detecting from said time data indicating whether the local time is standard time or daylight saving time when said local time indicated by said time data changes from daylight saving time to standard time or from standard time to daylight saving time, said clock setting means (22A) being operative to set said internal clock to said local time when said change from daylight saving time to standard time or from standard time to daylight saving time in said local time is detected by said detecting means.

2. A broadcast signal receiver according to claim 1, wherein said clock setting means is operative to set said internal clock to said local time after said broadcast signal receiver is turned off.

3. A broadcast signal receiver according to claim 1, wherein said clock setting means is operative to set said internal clock to said local time at a fixed predetermined internal clock time.

4. A broadcast signal receiver according to claim 3, wherein said clock setting means is operative to set said internal clock to said local time at said fixed predetermined time only if said broadcast signal receiver is turned off.

5. A broadcast signal receiver according to claim 1, comprising means for determining a difference between said internal clock time and said local time, and wherein said clock setting means is operative to set said internal clock to said local time only when said determined difference is less than a predetermined threshold amount.

6. A broadcast signal receiver according to claim 1, comprising programmed recording means for recording received broadcast signals on a record medium at a programmed time.

7. A broadcast signal receiver according to claim 6, comprising means for determining a difference between said programmed time and said internal clock time, and wherein said clock setting means is operative to set said internal clock to said local time only when said determined difference is greater than a predetermined threshold amount.

8. A broadcast signal receiver according to claim 1, wherein said clock setting means is operative to set said internal clock to said local time if said internal clock had not been previously set.

9. A broadcast signal receiver according to any one of the preceding claims, which is a video tape recorder.

10. A method of setting an internal clock indicating an internal clock time in a broadcast signal receiver, the method comprising the steps of:
tuning (12/20) to a predetermined one of a plurality of broadcast signals which has time data indicating (i) a local time and (ii) whether the local time is standard time or daylight saving time;
extracting (22A) said time data from said tuned broadcast signal;
setting (22A) said internal clock to said local time indicated by said extracted local time data; and
detecting, from said time data indicating whether the local time is standard time or daylight saving time, when said local time indicated by said time data changes from daylight saving time to standard time or from standard time to daylight saving time, said internal clock being set to said local time when a said change from daylight saving time to standard time or from standard time to daylight saving time in said local time is detected.

11. A method according to claim 10, wherein said internal clock is set to said local time after said broadcast signal receiver is turned off.

12. A method according to claim 10, wherein said internal clock is set to said local time at a fixed predetermined internal clock time.

13. A method according to claim 12, wherein said internal clock is set to said local time at said fixed predetermined time only if said broadcast signal receiver is turned off.

14. A method according to claim 10, comprising the step of determining a difference between said internal clock time and said local time, and wherein said internal clock is set to said local time only when said determined difference is less than a predetermined threshold amount.

15. A method according to claim 10, wherein said broadcast signal receiver is operable to record a broadcast signal at a programmed time, said method comprising the step of determining a difference between said programmed time and said internal clock time, and wherein said internal clock is set to said local time only when said determined difference is greater than a predetermined threshold amount.

16. A method according to claim 10, wherein said internal clock is set to said local time if said internal clock had not been previously set.

## Patentansprüche

1. Rundfunksignalempfänger mit einer internen Uhr, die eine interne Uhrzeit anzeigt, umfassend
eine Einrichtung zum Empfang einer Vielzahl von Rundfunksignalen,
eine Abstimmeinrichtung (12/20), die auf ein bestimmtes Rundfunksignal der genannten Rundfunksignale abstimmbar ist, welches Zeitdaten aufweist, und die das bestimmte eine Rundfunksignal der genannten Rundfunksignale als ein abgestimmtes Ausgangssignal abgibt, wobei die genannten Zeitdaten (i) eine lokale Zeit anzeigen und (ii) angeben, ob die lokale Zeit Normalzeit oder Sommerzeit ist,
eine Einrichtung (22A) zum Extrahieren der genannten Zeitdaten aus dem genannten abgestimmten Ausgangssignal,
eine Uhreinstelleinrichtung (22A), die auf die genannten extrahierten lokalen Zeitdaten hin die genannte interne Uhr auf die genannte lokale Zeit automatisch einstellt,
und eine Detektiereinrichtung, die aus den Zeitdaten, welche angeben, ob die lokale Zeit die Normalzeit oder die Sommerzeit ist, ermittelt, wenn die durch die genannten Zeitdaten angezeigte lokale Zeit sich von der Sommerzeit zur Normalzeit oder von der Normalzeit zur Sommerzeit ändert, wobei die genannte Uhreinstellrichtung (22A) derart betrieben ist, dass die genannte interne Uhr auf die genannte lokale Zeit dann eingestellt wird, wenn die genannte Änderung von der Sommerzeit zur Normalzeit oder von der Normalzeit zur Sommerzeit in der betreffenden lokalen Zeit durch die genannte Detektiereinrichtung ermittelt wird.

2. Rundfunksignalempfänger nach Anspruch 1, wobei die genannte Uhreinstelleinrichtung derart betrieben ist, dass die genannte interne Uhr auf die genannte lokale Zeit eingestellt wird, nachdem der genannte Rundfunksignalempfänger ausgeschaltet ist.

3. Rundfunksignalempfänger nach Anspruch 1, wobei die genannte Uhreinstelleinrichtung derart betrieben ist, dass die genannte interne Uhr auf die genannte lokale Zeit zu einer festliegenden bestimmten internen Uhrzeit eingestellt wird.

4. Rundfunksignalempfänger nach Anspruch 3, wobei die genannte Uhreinstelleinrichtung derart betrieben ist, dass die genannte interne Uhr auf die genannte lokale Zeit zu der genannten festliegenden bestimmten Zeit lediglich dann eingestellt wird, wenn der genannte Rundfunksignalempfänger ausgeschaltet ist.

5. Rundfunksignalempfänger nach Anspruch 1, umfassend eine Einrichtung zur Bestimmung einer Differenz zwischen der genannten internen Uhrzeit und der genannten lokalen Zeit, wobei die genannte Uhreinstelleinrichtung derart betrieben ist, dass die genannte interne Uhr auf die genannte lokale Zeit lediglich dann eingestellt wird, wenn die genannte bestimmte Differenz kleiner ist als ein bestimmter Schwellwert.

6. Rundfunksignalempfänger nach Anspruch 1, umfassend eine programmierte Aufzeichnungseinrichtung zur Aufzeichnung empfangener Rundfunksignale auf einem Aufzeichnungsträger zu einer programmierten Zeit.

7. Rundfunksignalempfänger nach Anspruch 6, umfassend eine Einrichtung zur Bestimmung einer Differenz zwischen der genannten programmierten Zeit und der internen Uhrzeit, wobei die genannte Uhreinstelleinrichtung derart betrieben ist, dass die genannte interne Uhr auf die lokale Zeit lediglich dann eingestellt wird, wenn die genannte bestimmte Differenz größer ist als ein bestimmter Schwellwert.

8. Rundfunksignalempfänger nach Anspruch 1, wobei die genannte Uhreinstelleinrichtung derart betrieben ist, dass die genannte interne Uhr auf die genannte lokale Zeit dann eingestellt wird, wenn die betreffende interne Uhr nicht zuvor eingestellt worden war.

9. Rundfunksignalempfänger nach irgendeinem der vorhergehenden Ansprüche, wobei er ein Videobandrecorder ist.

10. Verfahren zur Einstellung einer internen Uhr, die eine interne Uhrzeit anzeigt, in einem Rundfunksignalempfänger, umfassend die Verfahrensschritte:
Abstimmen (12/20) auf ein bestimmtes Rundfunksignal einer Vielzahl von Rundfunksignalen, das Zeitdaten aufweist, welche (i) eine lokale Zeit anzeigen und (ii) angeben, ob die lokale Zeit Normalzeit oder Sommerzeit ist,
Extrahieren (22A) der genannten Zeitdaten aus dem genannten abgestimmten Rundfunksignal,
Einstellen (22A) der genannten internen Uhr auf die lokale Zeit, welche durch die genannten extrahierten lokalen Zeitdaten angegeben ist,
und Feststellen aus den Zeitdaten, welche angeben, ob die lokale Zeit die Normalzeit oder die Sommerzeit ist, wenn die durch die genannten Zeitdaten angezeigte lokale Zeit sich von der Sommerzeit zur Normalzeit oder von der Normalzeit zur Sommerzeit ändert,
wobei die genannte interne Uhr auf die lokale Zeit eingestellt wird, wenn die genannte Änderung von der Sommerzeit zur Normalzeit oder von der Normalzeit zur Sommerzeit in der betreffenden lokalen Zeit ermittelt wird.

11. Verfahren nach Anspruch 10, wobei die genannte interne Uhr auf die genannte lokale Zeit eingestellt wird, nachdem der genannte Rundfunksignalempfänger ausgeschaltet ist.

12. Verfahren nach Anspruch 10, wobei die genannte interne Uhr auf die genannte lokale Zeit zu einer festliegenden bestimmten internen Uhrzeit eingestellt wird.

13. Verfahren nach Anspruch 12, wobei die genannte interne Uhr auf die genannte lokale Zeit zu der genannten festliegenden bestimmten Zeit lediglich dann eingestellt wird, wenn der betreffende Rundfunksignalempfänger ausgeschaltet wird.

14. Verfahren nach Anspruch 10, umfassend den Schritt zur Bestimmung einer Differenz zwischen der genannten internen Uhrzeit und der genannten lokalen Zeit, wobei die betreffende interne Uhr auf die genannte lokale Zeit lediglich dann eingestellt wird, wenn die betreffende bestimmte Differenz kleiner ist als ein bestimmter Schwellwert.

15. Verfahren nach Anspruch 10, wobei der genannte Rundfunksignalempfänger derart betreibbar ist, dass er ein Rundfunksignal zu einer programmierten Zeit aufzeichnet,
umfassend den Verfahrensschritt der Bestimmung einer Differenz zwischen der genannten programmierten Zeit und der genannten internen Uhrzeit,
wobei die genannte interne Uhr auf die genannte lokale Zeit lediglich dann eingestellt wird, wenn die genannte bestimmte Differenz größer ist als ein bestimmter Schwellwert.

16. Verfahren nach Anspruch 10, wobei die genannte interne Uhr auf die genannte lokale Zeit dann eingestellt wird, wenn die betreffende interne Uhr nicht zuvor eingestellt worden ist.

## Revendications

1. Récepteur de signaux de radiodiffusion comportant une horloge interne indiquant une heure d'horloge interne, le récepteur comprenant :
des moyens pour recevoir une pluralité de signaux de radiodiffusion ;
des moyens d'accord (12/20) accordables sur un signal prédéterminé parmi lesdits signaux de radiodiffusion comportant des données d'heure et fournissant ledit signal prédéterminé parmi lesdits signaux de radiodiffusion en tant que signal de sortie d'accord, lesdites données d'heure indiquant (i) une heure locale et (ii) si l'heure locale est l'heure normale ou l'heure d'été ;
des moyens (22A) pour extraire lesdites données d'heure dudit signal de sortie d'accord ;
des moyens de réglage d'horloge (22A) sensibles auxdites données d'heure locale extraites pour régler automatiquement ladite horloge interne à ladite heure locale ; et
des moyens de détection pour détecter, à partir desdites données d'heure indiquant si l'heure locale est l'heure normale ou l'heure d'été, quand ladite heure locale indiquée par lesdites données d'heure passe de l'heure d'été à l'heure normale ou de l'heure normale à l'heure d'été, lesdits moyens de réglage d'horloge (22A) servant à régler ladite horloge interne à ladite heure locale lorsque ledit passage de l'heure d'été à l'heure normale ou de l'heure normale à l'heure d'été de ladite heure locale est détecté par lesdits moyens de détection.

2. Récepteur de signaux de radiodiffusion selon la revendication 1, dans lequel lesdits moyens de réglage d'horloge servent à régler ladite horloge interne à ladite heure locale après l'arrêt dudit récepteur de signaux de radiodiffusion.

3. Récepteur de signaux de radiodiffusion selon la revendication 1, dans lequel lesdits moyens de réglage d'horloge servent à régler ladite horloge interne à ladite heure locale à une heure d'horloge interne prédéterminée fixée.

4. Récepteur de signaux de radiodiffusion selon la revendication 3, dans lequel lesdits moyens de réglage d'horloge servent à régler ladite horloge interne à ladite heure locale à ladite heure prédéterminée fixée uniquement si ledit récepteur de signaux de radiodiffusion est arrêté.

5. Récepteur de signaux de radiodiffusion selon la revendication 1, comprenant des moyens pour déterminer une différence entre ladite heure d'horloge interne et ladite heure locale, et dans lequel lesdits moyens de réglage d'horloge servent à régler ladite horloge interne à ladite heure locale uniquement lorsque ladite différence déterminée est inférieure à une quantité de seuil prédéterminée.

6. Récepteur de signaux de radiodiffusion selon la revendication 1, comprenant des moyens d'enregistrement programmés pour enregistrer les signaux de radiodiffusion reçus sur un support d'enregistrement à une heure programmée.

7. Récepteur de signaux de radiodiffusion selon la revendication 6, comprenant des moyens pour déterminer une différence entre ladite heure programmée et ladite heure d'horloge interne, et dans lequel lesdits moyens de réglage d'horloge servent à régler ladite horloge interne à ladite heure locale uniquement lorsque ladite différence déterminée est supérieure à une quantité de seuil prédéterminée.

8. Récepteur de signaux de radiodiffusion selon la revendication 1, dans lequel lesdits moyens de réglage d'horloge servent à régler ladite horloge interne à ladite heure locale si ladite horloge interne n'a pas été réglée préalablement.

9. Récepteur de signaux de radiodiffusion selon l'une quelconque des revendications précédentes, qui est un magnétoscope.

10. Procédé de réglage d'une horloge interne indiquant une heure d'horloge interne dans un récepteur de signaux de radiodiffusion, le procédé comprenant les étapes consistant à :
effectuer l'accord (12/20) sur un signal prédéterminé parmi une pluralité de signaux de radiodiffusion qui comporte des données d'heure indiquant (i) une heure locale et (ii) si l'heure locale est l'heure normale ou l'heure d'été ;
extraire (22A) lesdites données d'heure dudit signal de radiodiffusion d'accord ;
régler (22A) ladite horloge interne à ladite heure locale indiquée par lesdites données d'heure locale extraites ; et
détecter, à partir desdites données d'heure indiquant si l'heure locale est l'heure normale ou l'heure d'été, lorsque ladite heure locale indiquée par lesdites données d'heure passe de l'heure d'été à l'heure normale ou de l'heure normale à l'heure d'été, ladite horloge interne étant réglée à ladite heure locale lorsqu'un dit passage de l'heure d'été à l'heure normale ou de l'heure normale à l'heure d'été de ladite heure locale est détecté.

11. Procédé selon la revendication 10, dans lequel ladite horloge interne est réglée à ladite heure locale après l'arrêt dudit récepteur de signaux de radiodiffusion.

12. Procédé selon la revendication 10, dans lequel ladite horloge interne est réglée à ladite heure locale à une heure d'horloge interne prédéterminée fixée.

13. Procédé selon la revendication 12, dans lequel ladite horloge interne est réglée à ladite heure locale à ladite heure prédéterminée fixée uniquement si ledit récepteur de signaux de radiodiffusion est arrêté.

14. Procédé selon la revendication 10, comprenant l'étape consistant à déterminer une différence entre ladite heure d'horloge interne et ladite heure locale, et dans lequel ladite horloge interne est réglée à ladite heure locale uniquement lorsque ladite différence déterminée est inférieure à une quantité de seuil prédéterminée.

15. Procédé selon la revendication 10, dans lequel ledit récepteur de signaux de radiodiffusion sert à enregistrer un signal de radiodiffusion à une heure programmée, ledit procédé comprenant l'étape consistant à déterminer une différence entre ladite heure programmée et ladite heure d'horloge interne, et dans lequel ladite horloge interne est réglée à ladite heure locale uniquement lorsque ladite différence déterminée est supérieure à une quantité de seuil prédéterminée.

16. Procédé selon la revendication 10, dans lequel ladite horloge interne est réglée à ladite heure locale si ladite horloge interne n'a pas été réglée préalablement.
